# EUROPEAN PATENT APPLICATION

(11) **EP 1 014 663 A2**
(43) Date of publication of application: **28.06.2000**
(21) Application number: 99308321.1
(22) Date of filing: 21.10.1999
(51) Int. Cl.: H04M 3/533

(54) **Method of accessing messages over a data network**

(30) Priority: 23.12.1998 GB 9828657
(71) Applicant: NORTEL NETWORKS CORPORATION, Montreal, Quebec H2Y 3Y4 (CA)
(72) Inventor: Quinn, Brian Michael, Athenry, County Galway (IE); Hession, Patrick Peter, County Galway Oranmore (IE)
(74) Representative: Cutforth, Peter Nicholas

(57) **Abstract**

A data terminal is used to access, via a data network, a message which is stored by a messaging system. The message has content which requires real-time playback at the terminal, such as a voice mail message. A request for the message is sent to the messaging system, and in response to receiving the request the messaging system initiates a communications call over the data network to the data terminal. The requested message is delivered by playing the message during the call over the data network. This avoids delays in retrieving messages via FTP.

## Description

### TECHNICAL FIELD

This invention relates to a method of accessing messages, such as voice messages, over a data network.

### BACKGROUND OF THE INVENTION

It is now possible to communicate with a wide range of techniques. As well as conventional telephone calls and facsimile transmission, it is also possible to send e-mails and data messages. Increasingly, many telephone calls do not achieve their intended objective of putting two parties into direct voice communication with each other. A party has a voice mailbox on a voicemail system so that, should they be unavailable, the calling party can leave a voice message for them which they can subsequently listen to.

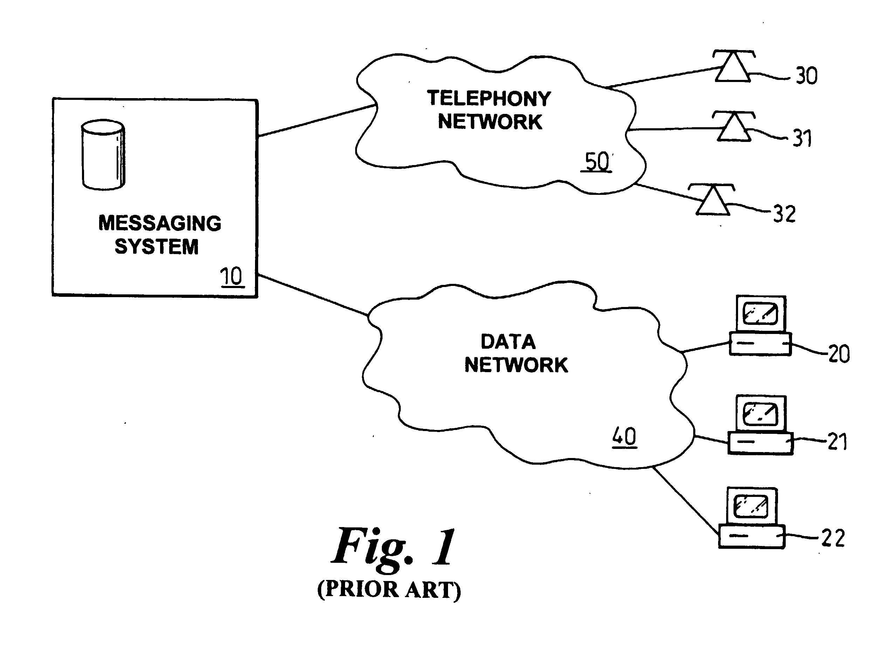

It is known to provide "unified" messaging systems which allow a user to access all of their messages, regardless of their type. Instead of separately accessing a voicemail system to check for voicemails, an e-mail account to check for e-mails and so on, a single messaging system handles these different message types. Figure 1 shows a messaging system 10 which is linked to a telephony network 50 serving telephony (voice/fax) terminals 30, 31, 32 and a data network 40 serving data terminals 20, 21, 22. Voice messages, fax messages or e-mail messages intended for a user can be stored by the messaging system for later retrieval by the user.

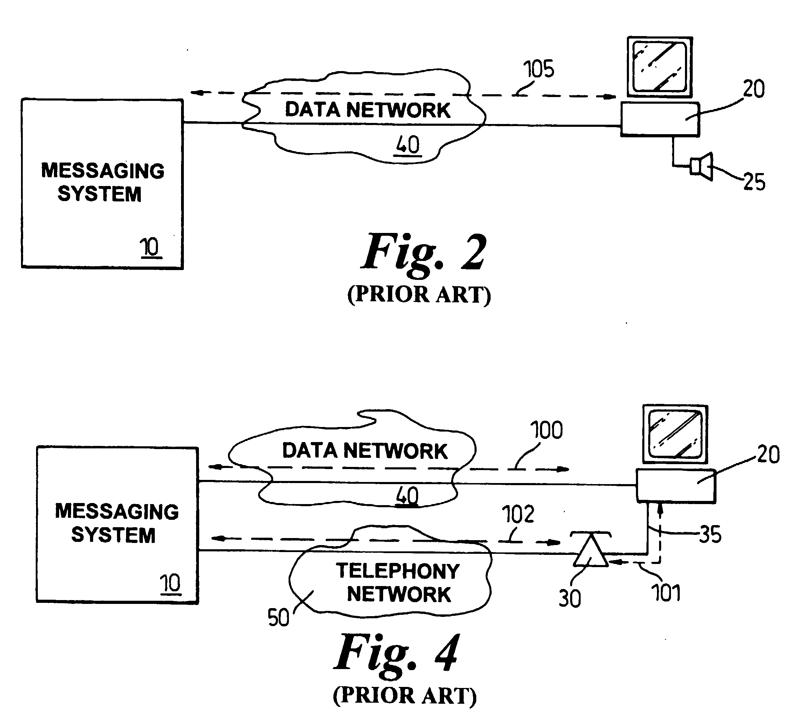

A user typically accesses their messages from a data terminal. Figure 2 shows a first known way by which a user can retrieve their messages from the messaging system. A user at data terminal 20, such a PC, is linked to the messaging system 10 via data network 40. A number of software packages, such as Microsoft Outlook™ and Lotus Notes™ are known which run on the data terminal and allow a user to access the messaging system and browse their stored messages.

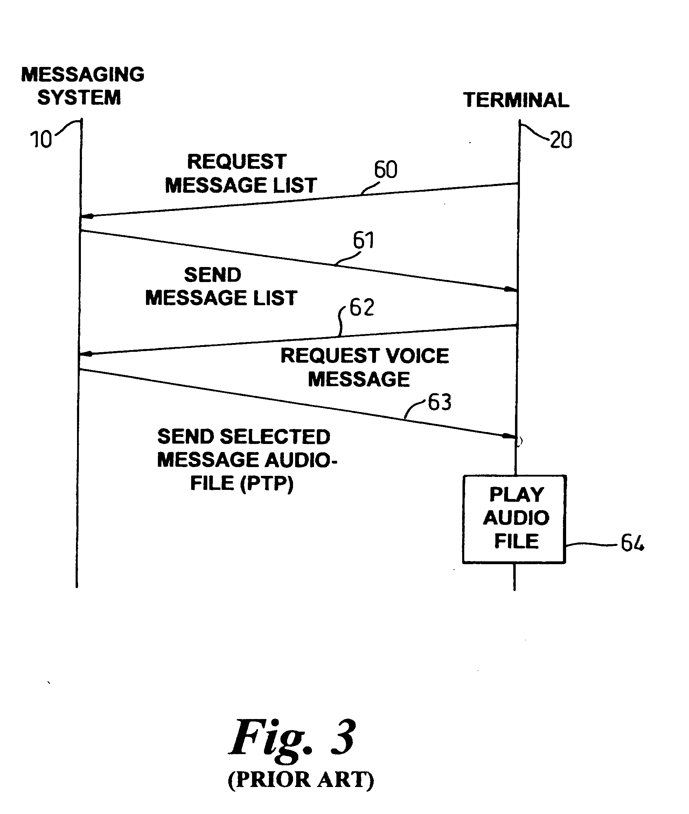

There are several ways by which a user can access their voice mail messages. In a first way, signalling 105 occurs between the data terminal 20 and messaging system 10 to select a voice message for retrieval, and the message is played back via a soundcard and an audio speaker 25 at the terminal. Figure 3 shows the signalling exchange 105 in more detail. At step 60 a user requests a list of stored voicemail messages from the messaging system 10, and this is returned to the terminal at step 61. At step 62 a user requests a particular voicemail message that they would like to hear and this is delivered to the terminal at step 63. The voicemail message is delivered as an audio file to the terminal. File Transfer Protocol (FTP) or a similar technique can be used to request and deliver the audio file. The terminal stores this file and then plays it back to the user at step 64. A disadvantage with this method is that the audio files are often large and therefore take up valuable storage space at the terminal. It can also be slow to review a message in this way.

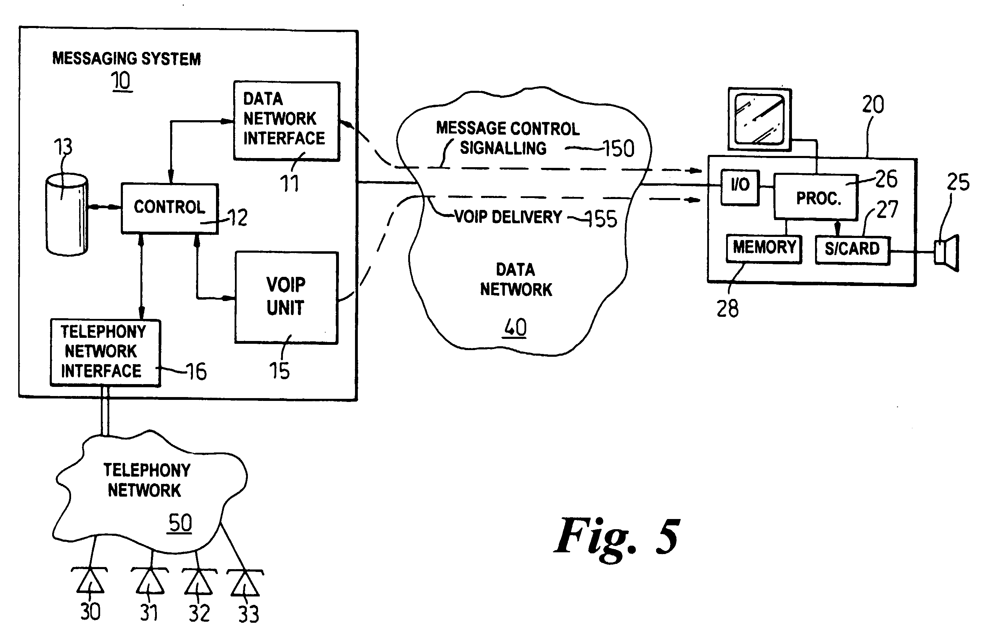

A second way of accessing a stored voicemail message is shown in figure 4. This uses a form of computer-telephony integration. The user's data terminal is connected to data network 40, as before, but is also connected to a telephone 30 at the user's desk. The telephone is connected to telephony network 50, as normal. A signalling exchange 100 between the data terminal 20 and messaging system 10 allows the user to view a list of stored voicemail messages from the messaging system 10. A further signalling exchange 101 between the data terminal 20 and telephone 30, which is carried over the telephony network 50 to the messaging system as a further signalling exchange 102 causes the telephone 30 to initiate a voice call to the messaging system via the telephony network to review the required voicemail message. The voicemail is heard via the telephone, under the control of the data terminal 20. A disadvantage of this method is that it requires the data terminal and telephone to be linked, which only makes it practical for a user's normal working environment.

The present invention seeks to provide an alternative way of accessing messages from a data terminal.

### SUMMARY OF THE INVENTION

According to a first aspect of the present invention there is provided a method of sending a message to a data terminal, which message is stored by a messaging system that is coupled to the data terminal via a data network, the message having content which requires real-time playback at the terminal, the method comprising, at the messaging system:
- receiving, from the data terminal, a request for a message that is stored by the messaging system, the request being received over the data network;
- initiating a communications call over the data network to the data terminal; and,
- delivering the requested message by playing the message during the call over the data network.

Preferably the messaging system is coupled to a telephony network and can store voicemail messages for telephony users, the request being a request for a stored voicemail message, and the communications call being a voice call over the data network.

The data network can be an intemet protocol (IP) based network and the call can be a voice over IP (VolP) call.

The communications call supports two-way communication between the messaging system and the user, and the return path of the call, i.e. from the user to the messaging system, can be used to carry spoken commands from the user to control operation of the messaging system or to compose new voice messages.

Further aspects of the invention provide a messaging system, a data terminal and a program for use with the terminal which perform the above methods.

A further aspect of the invention provides a method of sending a message from a data terminal, which message is to be stored by a messaging system that is coupled to the data terminal via a data network, the message having content which requires real-time playback, the method comprising, at the data terminal:
- sending a request for a message to be stored by the messaging system, the request being sent over the data network;
- initiating a communications call over the data network to the messaging system; and,
- sending the message during the call over the data network.

Preferred features may be combined as appropriate, and may be combined with any of the aspects of the invention, as would be apparent to a person skilled in the art.

### BRIEF DESCRIPTION OF THE DRAWINGS

For a better understanding of the invention, and to show by way of example how it may be carried into effect, embodiments will now be described with reference to the accompanying drawings, in which:
Figure 1 shows a messaging system;
Figure 2 shows a first arrangement by which a user can access the messaging system;
Figure 3 shows an example of signalling to access the messaging system;
Figure 4 shows a second arrangement by which a user can access the messaging system;
Figure 5 shows a further arrangement embodying a preferred form of the invention by which a user can access the messaging system;
Figure 6 shows signalling used in the arrangement of figure 5;
Figure 7 shows signalling by which a user can record a message on the messaging system.

### DESCRIPTION OF PREFERRED EMBODIMENTS

Figure 5 shows a data terminal 20, such a PC, which is coupled to a data networK 40. Terminal 20 runs a software package which allows a user to access the messaging system and browse their stored messages. Terminal 20 has the conventional components of a processor 26, data interface I/O, memory 28 as well as a soundcard 27 and an audio speaker 25 for replaying audio data.

Messaging system 10 is also linked to the data network. Messaging system 10 comprises a data network interface 11, a control entity 12, a message store 13, a telephony network interface 16 and a voice over IP unit 15. The messaging system can have further interfaces to other networks, according to the range of message types that it supports.

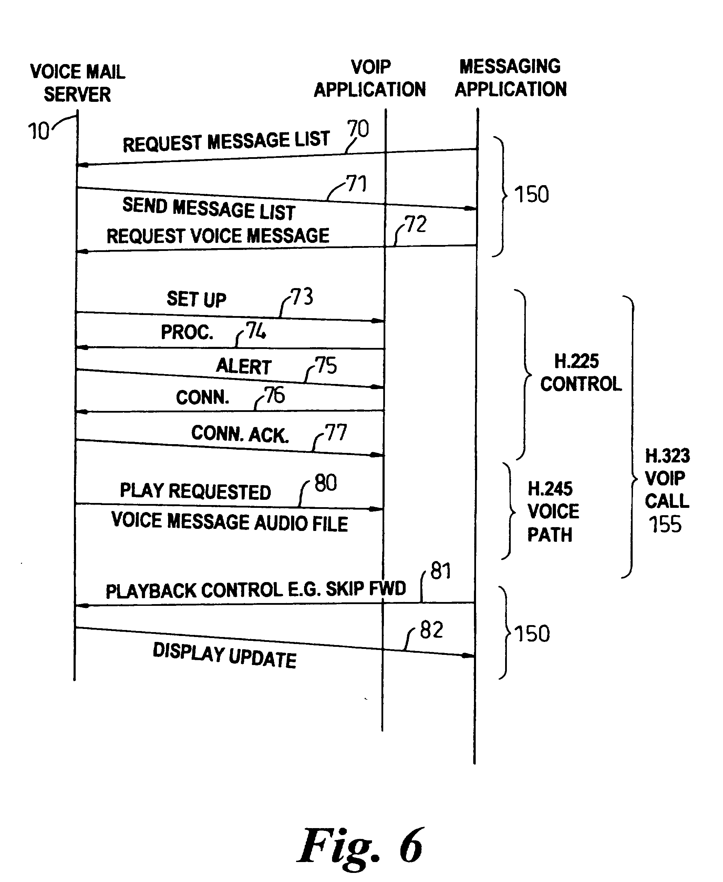

A user interacts with terminal 20 which runs software to support these functions. The terminal software includes a messaging application, which supports the message management functions and signalling with the voice mail server. The management software, in turn, generates signalling 150 across the data network. The terminal software also includes a voice over IP application which supports delivery of the requested message from the server and playback of that message to the user. Signalling is shown with reference to figure 6. At step 70 a user requests a list of stored voicemail messages from the messaging system 10, and this is returned to the terminal at step 71. At step 72 a user requests a particular voicemail message that they would like to hear. The request can be made by the user double-clicking on a textual or graphical representation of the desired message on the screen of terminal 20. Server 10 then initiates a communications call over the data network 40 to deliver the requested message, shown as flow 155 in figure 5. In the following description this will > be described in terms of a voice over IP call, but it will be understood that other protocols could be used. Firstly, an H.225 exchange occurs, as shown by steps 73-77. If this is successfully acknowledged at step 77, an H.245 media (voice) path is established at step 80. During the H.245 session, the requested message is played back in real-time. These steps are achieved by control unit 12 issuing control signals to VoIP unit 15 to initiate the H.225 exchange, and controlling the release of the message audio data from store 13 to the VoIP unit 15 during the H.245 session. During this time, messaging system 10 receives the audio data from store 13 and converts it to VoIP form for transmission over the data network. Also, terminal 20 receives the audio data, packaged into VoIP transmission form, and converts the data into a form in which it can be replayed to the user via the soundcard and speaker.

Should the user wish to modify playback of the message in some way, such as by skipping backwards to repeat a portion of the message or skipping forwards to miss a portion of the message, it can be achieved in several ways. Firstly, the user can use the messaging application software to generate control signalling (step 81) which is carried over the data network to the messaging system In response to this signalling, the audio data being fed to the VoIP unit 15 is modified. Updated data about the message, such as the current position, as modified by the user's action, can be returned to the messaging application at step 82 for display to the user. Alternatively, the messaging system may respond to a user's spoken commands. Therefore, during playback of the message, or upon completion of the message, the user can issue spoken commands which are carried via the return path of the VolP call from the user's terminal. These commands will be received by the VoIP unit 15 and passed to the control unit 12 of the messaging system where they are interpreted and used to modify playback or control operation of the messaging system. A further type of spoken command that the user can issue, after listening to a message, is to dial the number of the person who left the message. The user can issue a spoken command to "DIAL" which will be carried via the VoIP unit 15 to the control unit 12.

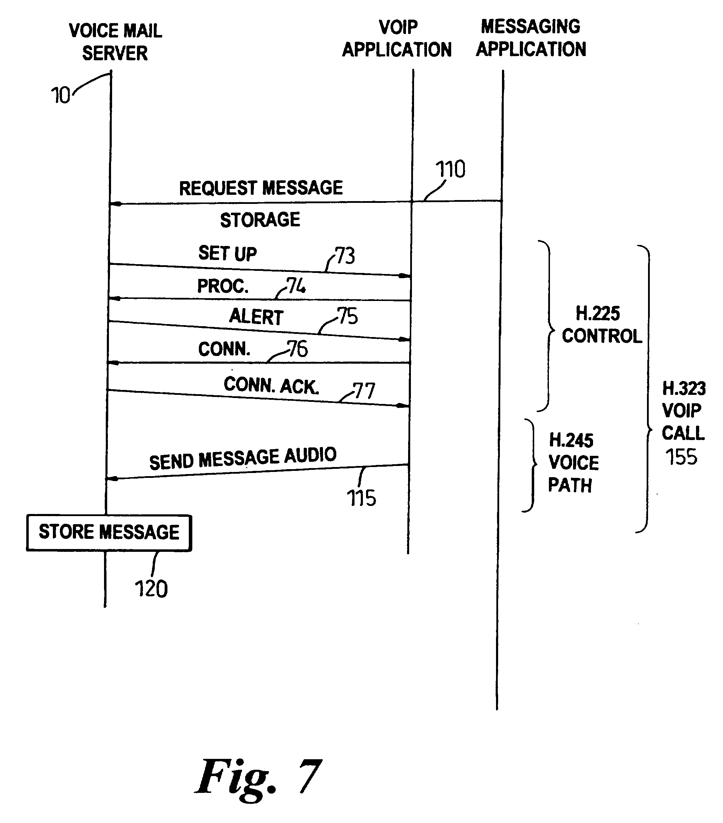

A further alternative is to allow the user at terminal 20 to compose voice mail messages by setting up a voice (or video) over IP call over the network to the messaging system and carrying the speech or video data to the messaging system where it can be recorded. This overcomes the need to record the message locally at the terminal before transmitting it across the data network, and therefore saves on storage requirements at the terminal. As before, a user interacts with terminal 20 which runs software to support these functions. The terminal software includes a messaging application, which supports the message management functions and signalling with the voice mail server. The management software, in turn, generates signalling 150 across the data network. The terminal software also includes a voice over IP application which supports delivery of the requested message from the server and playback of that message to the user. Signalling is shown with reference to figure 7. At step 110 a user requests to record a new voicemail message at the messaging system 10. The request can be made by the user double-clicking on a textual or graphical representation of a new message on the screen of terminal 20. A communications call is initiated over the data network 40 to allow the user to send his message, shown as flow 155 in figure 5. In the following description this will be described in terms of a voice over IP call, but it will be understood that other protocols could be used. Firstly, an H.225 exchange occurs, as shown by steps 73-77. If this is successfully acknowledged at step 77, an H.245 media (voice) path is established at step 80. During the H.245 session, the requested message is sent from the terminal in real-time (step 115). During this time, terminal 20 receives an audio signal from the user, converts it into audio data using the soundcard 27 and passes the audio data to the VoIP application for conversion into the appropriate format for transmission over the data network. Messaging system 10 receives the audio data in VoIP form, converts it to a suitable format for storage, and stores it for later retrieval (step 120). There is no need to store the audio data at terminal 20.

## Claims

1. A method of sending a message to a data terminal, which message is stored by a messaging system that is coupled to the data terminal via a data network, the message having content which requires real-time playback at the terminal, the method comprising, at the messaging system:
- receiving, from the data terminal, a request for a message that is stored by the messaging system, the request being received over the data network;
- initiating a communications call over the data network to the data terminal; and,
- delivering the requested message by playing the message during the call over the data network.

2. A method according to claim 1 wherein the messaging system is coupled to a telephony network and can store voicemail messages for telephony users, the request being a request for a stored voicemail message, and the communications call being a voice call over the data network.

3. A method according to claim 1 wherein the data network is an internet protocol (IP) based network and the call is an IP call.

4. A method according to claim 1 further comprising the messaging system sending a list of stored messages to the data terminal.

5. A method according to claim 1 further comprising receiving instructions to modify the delivery of the message.

6. A method according to claim 5 wherein the instructions are spoken instructions which are carried by the communications call over the data network.

7. A method of accessing a message from a data terminal, which message is stored by a messaging system that is coupled to the data terminal via a data network, the message having content which requires real-time playback at the terminal, the method comprising, at the data terminal:
- sending, from the data terminal, a request for a message that is stored by the messaging system, the request being sent over the data network;
- receiving a communications call over the data network from the messaging system; and,
- receiving the requested message during the call over the data network.

8. A messaging system for storing messages for users, which system is coupled to a user's data terminal via a data network, the stored message having content which requires real-time playback at the terminal, the system comprising:
- a receiver for receiving, from the data terminal, a request for a message that is stored by the messaging system, the request being received over the data network;
- initiating device for initiating a communications call over the data network to the data terminal; and,
- a delivery device for delivering the requested message by playing the message during the call over the data network.

9. A data terminal for accessing a message stored by a messaging system that is coupled to the data terminal via a data network, the message having content which requires real-time playback at the terminal, the terminal being arranged to:
- send, from the data terminal, a request for a message that is stored by the messaging system, the request being sent over the data network;
- receive a communications call over the data network from the messaging system; and,
- receive the requested message during the call over the data network.

10. A computer-readable medium whose contents cause a data terminal to access a message stored by a messaging system that is coupled to the data terminal via a data network, the message having content which requires real-time playback at the terminal, by performing the steps of:
- sending, from the data terminal, a request for a message that is stored by the messaging system, the request being sent over the data network;
- receiving a communications call over the data network from the messaging system; and,
- receiving the requested message during the call over the data network.

11. A method of storing a message at a messaging system, which message originates at a data terminal that is coupled to the messaging system via a data network, the message having content which requires real-time playback, the method comprising, at the messaging system:
- receiving, from the data terminal, a request for the message to be stored by the messaging system, the request being received over the data network;
- initiating a communications call over the data network to the data terminal; and,
- receiving and recording the message which is carried by the call over the data network.

12. A method of sending a message from a data terminal, which message is to be stored by a messaging system that is coupled to the data terminal via a data network, the message having content which requires real-time playback, the method comprising, at the data terminal:
- sending a request for a message to be stored by the messaging system, the request being sent over the data network;
- initiating a communications call over the data network to the messaging system; and,
- sending the message during the call over the data network.

13. A method of sending a file to a data terminal, which file is stored by a server that is coupled to the data terminal via a data network, the file having content which requires real-time playback at the terminal, the method comprising, at the server:
- receiving, from the data terminal, a request for a message that is stored by the server, the request being received over the data network;
- initiating a communications call over the data network to the data terminal; and,
- delivering the requested file by playing the file contents during the call over the data network.
